Europäisches Patentamt

European Patent Office

Office européen des brevets

(19)

(11) Numéro de publication : **0 486 838 B1**

(12) # FASCICULE DE BREVET EUROPEEN

(45) Date de publication du fascicule du brevet :
**18.05.94 Bulletin 94/20**

(51) Int. Cl.[5] : **B60C 11/12, B60C 11/11**

(21) Numéro de dépôt : **91118149.3**

(22) Date de dépôt : **24.10.91**

(54) **Bande de roulement d'enveloppe de pneumatique pour véhicules poids lourds.**

(30) Priorité : **15.11.90 FR 9014343**

(43) Date de publication de la demande :
**27.05.92 Bulletin 92/22**

(45) Mention de la délivrance du brevet :
**18.05.94 Bulletin 94/20**

(84) Etats contractants désignés :
**AT BE CH DE DK ES GB IT LI LU NL SE**

(56) Documents cités :
**EP-A- 0 235 072
EP-A- 0 355 636
EP-A- 0 397 639
FR-A- 1 568 310
US-A- 4 736 783**

(73) Titulaire : **COMPAGNIE GENERALE DES
ETABLISSEMENTS MICHELIN - MICHELIN &
CIE
12, Cours Sablon
F-63040 Clermont-Ferrand Cédex (FR)**

(72) Inventeur : **Lurois, Patrick
6 Hshwicke Lane
Greenville, S.C. 29605 (US)**

(74) Mandataire : **Hiebel, Robert et al
MICHELIN & CIE - Service K. Brevets
F-63040 Clermont-Ferrand Cedex (FR)**

EP 0 486 838 B1

# EP 0 486 838 B1

## Description

La présente invention est relative aux bandes de roulement d'enveloppes de pneumatiques à carcasse radiale destinées aux véhicules poids lourds et plus particulièrement aux autocars.

En raison des conditions très draconiennes d'utilisation d'enveloppes de pneumatiques munies de clous afin d'éviter la détérioration des routes ou même l'interdiction totale d'utiliser des enveloppes cloutées, il est apparu nécessaire d'avoir des enveloppes de pneumatiques destinées à des véhicules poids lourds et en particulier des autocars qui soient excellents en tous temps, sur toutes les positions du véhicule et notamment sur les essieux moteurs. Il est bien connu que la bande de roulement de pneus à carcasse radiale pour véhicules poids lourds tous temps est généralement constituée de blocs individuels disposés en plusieurs rangées circonférentielles de façon à posséder une excellente traction. Cependant une telle bande de roulement conduit rapidement à des usures anormales pouvant être à l'origine du retrait prématuré des pneus en raison du bruit produit au cours du roulage.

Pour remédier à cet inconvénient, il a été proposé dans le brevet US-A-4 676 290 une bande de roulement constituée de blocs individuels, comportant des évidements sur chacun de leurs bords circonférentiels, séparés dans le sens circonférentiel par d'étroites rainures d'orientation générale transversale de profondeur réduite par rapport à celles des rainures circonférentielles et formant des plates-formes entre les blocs dans le sens circonférentiel. Ces plates-formes identiques sont présentes dans toutes les rangées de blocs à l'exception des blocs latéraux de la bande de roulement. Une telle solution présente l'inconvénient de n'offrir qu'une faible motricité sur sol enneigé.

Il est en outre connu de la demande de brevet anglais GB-A-2 120 183 d'améliorer l'adhérence sur sol humide de véhicules poids lourds lorsqu'ils sont faiblement chargés en utilisant une bande de roulement constituée de plusieurs rangées de blocs individuels présents dans la zone médiane séparés les uns des autres dans le sens circonférentiel par des plates-formes disposées dans d'étroites rainures transversales, les plates-formes disposées au voisinage de l'axe médian de la bande de roulement possédant en totalité ou au moins sur la partie voisine de l'axe médian la hauteur la plus faible et une hauteur supérieure pour la partie orientée vers les bords de la bande de roulement. Cette solution pas plus que la précédente est satisfaisante du point de vue de l'adhérence sur sol enneigé.

Dans la demande de brevet européen EP-A-0 355 636 est décrite une bande de roulement de pneu poids lourd conservant les propriétés de freinage initiales même après mi-usure qui possède dans la zone équatoriale de ladite bande de roulement de fines incisions ayant une profondeur plus grande que celles présentes dans les zones latérales et, pour éviter une cassure de la gomme aux bords des incisions, une densité inférieure à la densité des incisions présentes dans les zones latérales ainsi qu'une surface totale des aires projetées des incisions des rangées situées aux épaules de la bande de roulement disposées sur la section méridienne qui est supérieure aux aires totales projetées des incisions des rangées situées dans la zone équatoriale sur la section méridienne. Cette solution n'est pas satisfaisante du point de vue d'une usure régulière de l'ensemble de la bande de roulement, notamment des bords de celle-ci.

La demande de brevet européen EP-A-0 235 072 décrit un pneu toutes saisons pour voitures de tourisme ou camionnette comprenant une bande de roulement comportant plusieurs rangées circonférentielles de blocs individuels reliés les uns aux autres par des plates-formes disposées dans des rainures transversales, ces plates-formes ayant toutes la même hauteur mais une forme géométrique ainsi qu'une longueur telles qu'elle confèrent une rigidité longitudinale maximale aux rangées de blocs latéraux et à la rangée de blocs équatoriale qui sont le siège d'une pression au sol maximale et une rigidité moindre aux rangées de blocs intermédiaires qui sont le siège d'une moindre pression au sol. Les blocs comportent en outre des incisions conventionnelles, c'est-à-dire d'égale profondeur et de même densité d'un bord à l'autre de la bande de roulement. Une telle solution n'est pas satisfaisante pour un pneu poids lourd toutes saisons, quant à l'adhérence sur sol enneigé et la régularité de l'usure, notamment en raison des différences de conditions de charge et de pression des deux types de pneus.

La présente invention vise à obtenir une bande de roulement excellente en tous temps et particulièrement adaptée pour assurer une adhérence élevée, à la fois sur sol humide et sur sol enneigé, et qui ne présente pas d'usures irrégulières ni de craquelures de la gomme.

La bande de roulement de pneumatique pour véhicules poids lourd comportant une pluralité de rainures d'orientation générale circonférentielle (10) et une pluralité de rainures d'orientation générale transversale (12) délimitant une pluralité de rangées circonférentielles de blocs individuels (13) et dont au moins une partie est munie d'incisions (15) ayant une profondeur qui est décroissante de l'équateur vers les bords de la bande de roulement, est caractérisée en ce que les blocs (13) sont reliés entre eux dans le sens circonférentiel par des plates-formes (14), dont la hauteur moyenne mesurée par rapport à la ligne fictive reliant le fond des rainures circonférentielles est croissante de l'équateur de la bande de roulement vers les bords, et en ce que la densité

2

des incisions (15) est maximale dans la zone équatoriale (Z) de la bande de roulement.

Si l'on considère une bande de roulement formée de blocs de gomme délimités par une pluralité de rainures circonférentielles et transversales, ces dernières possédant des plates-formes de gomme disposées entre les blocs de gomme les reliant dans le sens circonférentiel, et que l'on désigne en allant du plan équatorial vers chacun des deux bords de la bande de roulement, par $H_n$ la hauteur des blocs de rang n considéré des rangées circonférentielles successives de blocs par rapport au fond des rainures, par $h_n$ la hauteur moyenne des plates-formes, mesurée par rapport à la ligne fictive reliant le fond des rainures circonférentielles, présentes dans les rangées circonférentielles de rang n considéré, par $S_n$ la superficie des parois des blocs adjacents aux plates-formes des rangées circonférentielles de rang n considéré, par $s_n$ la superficie des parois des plates-formes adjacentes aux parois des blocs délimitant les rainures transversales des rangées circonférentielles de rang n considéré, par $P_n$ la profondeur des incisions ménagées dans les blocs de rangées circonférentielles successives de rang n considéré, par $A_n$ la superficie totale dans chacun des blocs de l'ensemble des incisions présentes dans un bloc d'une rangée circonférentielle de rang n considéré lorsqu'il y a plus d'une incision présente, par n le rang considéré des n rangées circonférentielles successives de blocs, exprimé par un indice allant croissant à partir de l'axe équatorial vers chacun des deux bords de la bande de roulement, des formes d'exécution de bandes de roulement conformes à l'invention sont obtenues si les différents paramètres relatifs aux plates-formes et aux incisions outre leur densité dans chacune des rangées circonférentielles répondent simultanément à l'ensemble des conditions suivantes étant précisé que les paramètres des rangées circonférentielles de blocs ne doivent être pris en considération qu'en fonction du nombre effectif et peu importe qu'il soit pair ou impair de rangées circonférentielles de blocs présents :

- dans le cas de bandes de roulement possédant de cinq à six rangées circonférentielles de blocs

a) $h1 = 0$ à $50$ % $H1$         $(h3/H3) - (h2/H2) \geq 20$ %
$h2 = 45$ à $75$ % $H2$     avec
$h3 = 70$ à $100$ % $H3$          $(h2/H2) - (h1/H1) \geq 10$ %

b) $s1 = 0$ à $35$ % $S1$         $(s3/S3) - (s2/S2) \geq 20$ %
$s2 = 20$ à $55$ % $S2$     avec
$s3 = 40$ à $100$ % $S3$          $(s2/S2) - (s1/S1) \geq 10$ %

c) $p1 = 40$ à $100$ % $H1$       $(P2/H2) - (P3/H3) \geq 10$ %
$p2 = 20$ à $55$ % $H2$     avec
$p3 = 0$ à $35$ % $H3$

d) $A1 = 40$ à $100$ % $S1$       $(A2/H2) - (A3/H3) \geq 10$ %
$A2 = 20$ à $55$ % $S2$     avec
$A3 = 0$ à $35$ % $S3$            $(A1/H1) - (A2/H2) \geq 10$ %

- dans le cas de bandes de roulement possédant sept ou huit rangées circonférentielles de blocs :

a) $h1 = 0$ à $50$ % $H1$     $(h4/H4) - (h3/H3) \geq 20$ %
$h2 = 30$ à $60$ % $H2$ avec $(h3/H3) - (h2/H2) \geq 10$ %
$h3 = 50$ à $80$ % $H3$       $(h2/H2) - (h1/H1) \geq 5$ %
$h4 = 70$ à $100$ % $H4$

```
b) s1 =   0 à  30 % S1          (s4/S4) - (s3/S3) ≥ 20 %

   s2 =  10 à  40 % S2   avec   (s3/S3) - (s2/S2) ≥ 10 %

   s3 =  20 à  50 % S3

   s4 =  40 à 100 % S4          (s2/S2) - (s1/S1) ≥  5 %


c) P1 =  45 à 100 % H1

   P2 =  30 à  80 % H2   avec   (p3/H3) - (p4/H4) ≥ 10 %

   P3 =  15 à  55 % H3          (p2/H2) - (p3/H3) ≥  5 %

   P4 =   0 à  30 % H4


d) A1 =  45 à 100 % S1          (A3/S3) - (A4/S4) ≥ 10 %

   A2 =  30 à  80 % S2   avec   (A2/S2) - (A3/S3) ≥ 10 %

   A3 =  15 à  55 % S3          (A1/S1) - (A2/S2) ≥  5 %

   A4 =   0 à  30 % S4
```

Une forme d'exécution préférentielle consiste à satisfaire pour les deux catégories de cas décrits ci-dessus à la condition supplémentaire suivante :

$$0,85\ H_n < P_n + h_n < 1,15\ H_n \text{ et } 0,8\ S_n < s_n + A_n < 1,20\ S_n$$

La forme des plates-formes ménagées dans les rainures transversales peut être quelconque bien qu'une forme d'exécution préférentielle consiste dans l'usage de plates-formes plus larges que hautes dont les parois transversales d'orientation générale circonférentielle sont raccordées au fond des rainures à l'aide d'un arc de cercle de manière à conserver un canal d'évacuation de l'eau lorsque la bande de roulement est déjà à un stade avancé d'usure. Selon une variante d'exécution, il est possible que la ou les rangée(s) circonférentielle(s) de blocs de rang n voisine(s) du plan équatorial ne possède(nt) pas de plate-forme.

Les incisions ménagées dans les blocs peuvent avoir une inclinaison par rapport à la normale à la surface de la bande de roulement et une forme quelconque, notamment le fond des incisions peut ou non être rectiligne. Dans le cas d'incisions à formes irrégulières, pour déterminer la profondeur P de l'incision on prend la demi-somme du point de profondeur minimale P' et du point de profondeur maximale P'', $P = (P' + P'')/2$. Les incisions ménagées dans les blocs doivent s'étendre d'un des bords des blocs sur au moins les trois quart de la largeur des blocs et préférentiellement débouchent des deux côtés dans les rainures circonférentielles ou les bords de la bande de roulement. La largeur des incisions doit être inférieure à 2 mm et préférentiellement ne pas dépasser 1 mm. Les incisions doivent avoir une orientation générale transversale et selon une forme d'exécution préférentielle sont rectilignes, débouchent perpendiculairement sur les deux bords des blocs et ne sont pas inclinées par rapport à la normale à la surface de la bande de roulement.

La densité des incisions doit être la plus importante dans la rangée équatoriale ou dans les rangées situées de part et d'autre et adjacentes du plan équatorial de la bande de roulement. Le nombre d'incisions peut être variable et selon une forme d'exécution les rangées circonférentielles délimitant les bords de la bande de roulement peuvent être dépourvues d'incisions.

Les rainures d'orientation générale transversale peuvent être en ligne droite ou en ligne brisée.

De manière inattendue, il a été constaté que les bandes de roulement conformes à l'invention, grâce à la combinaison de mesures contradictoires consistant d'une part à coupler les blocs les uns aux autres circonférentiellement au moyen de plates-formes de hauteurs croissantes de l'équateur vers les bords de la bande de roulement et d'autre part à accroître la mobilité de la gomme des blocs au moyen d'incisions appropriées en superficie et en densité, permet d'obtenir avec un pneu poids lourd à carcasse radiale, une rigidité longitudinale décroissant progressivement des bords vers l'équateur de la bande de roulement et de conduire à des pneus pour véhicules poids lourd excellents pour les quatre saisons, c'est-à-dire ayant à la fois une excellente motricité sur routes enneigées et une bonne adhérence sur sol humide tout en présentant une usure régulière de l'ensemble de la bande de roulement et ce quelqu'en soit le niveau d'usure.

L'invention est illustrée, à titre non limitatif, par l'exemple décrit.

La figure 1 représente en plan une portion de bande de roulement suivant l'invention et la figure 1bis une

4

autre variante d'exécution.

La figure 2 représente en coupe suivant la ligne II-II une portion de la bande de roulement conforme à l'invention.

La figure 3 représente une coupe suivant la ligne III-III, une portion de la bande de roulement conforme à l'invention.

La figure 4 représente en coupe une forme d'exécution d'une incision n'ayant pas de fond rectiligne.

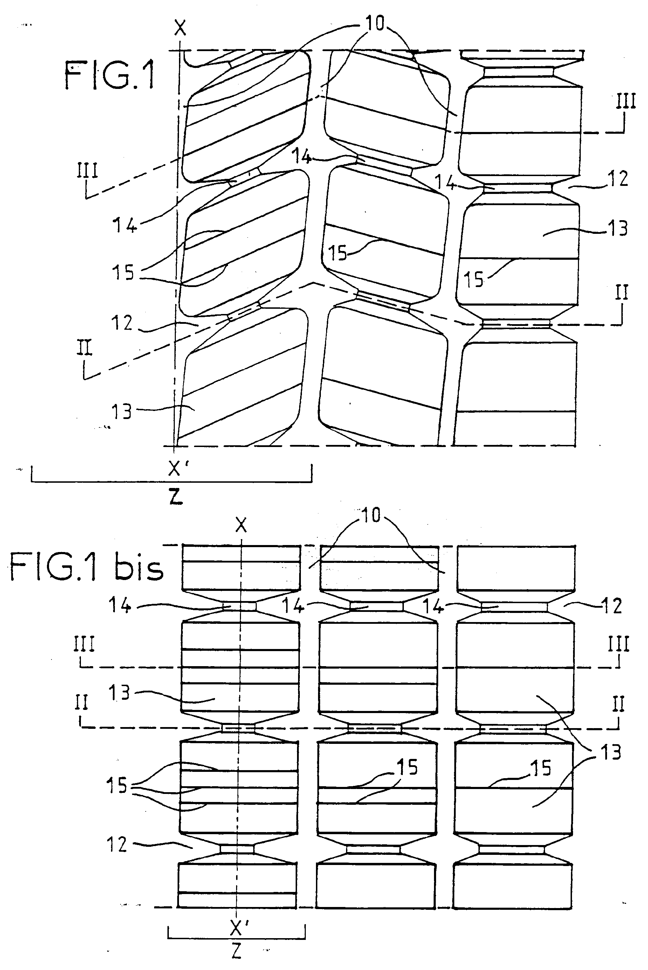

La bande de roulement représentée sur la figure 1 possède cinq rainures circonférentielles 10 en ligne brisée et des rainures d'orientation générale transversale 12 en ligne brisée délimitant six rangées circonférentielles de blocs individuels 13.

Les deux rangées situées de part et d'autre et au voisinage du plan équatorial de rang 1 constituent la zone équatoriale Z de la bande de roulement tandis que les autres rangées s'étendant vers les bords de la bande de roulement sont les rangées de rang 2 et 3.

Dans les rainures transversales 12, les blocs sont reliés entre eux au moyen de plates-formes de gomme 14. Les blocs sont pourvus d'incisions 15 d'orientation générale transversale reliant les rainures circonférentielles 10.

La figure 1 bis représente une forme d'exécution dans laquelle la bande de roulement possède quatre rainures circonférentielles délimitant cinq rangées de blocs et la rangée de blocs situées sur l'équateur de la bande de roulement constitue la rangée de rang 1 qui représente la zone équatoriale Z.

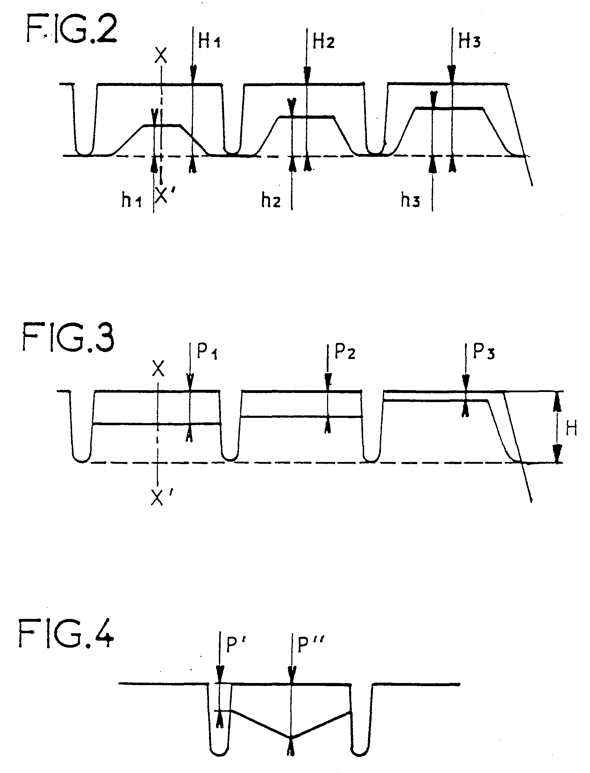

La figure 2 représente en coupe, selon la figure 1 bis, une section de plates-formes disposées dans les rainures transversales 12 dans chacune des rangées circonférentielles de blocs de rang n = 1, n = 2 et n = 3.

La figure 3 représente en coupe, selon la figure 1bis, des formes d'exécution d'incisions 15 présentes dans les rangées de blocs tandis que la figure 4 représente une autre forme d'exécution possible d'une incision 15.

Un essai comparatif est effectué avec des pneus gonflés et chargés aux conditions nominales. Un pneu de dimension 295/80 R 22,5 ayant une bande de roulement conforme à l'invention a été comparé à un pneu témoin ayant la même constitution à l'exception de la bande de roulement qui diffère de celle conforme à l'invention par l'absence des plates-formes et des incisions. Les pneus ont été montés sur l'essieu moteur d'un autocar et soumis à un roulage sur autoroute pour 80 % du kilométrage parcouru et sur routes humides ou enneigées de montagne pour 20 % du kilométrage parcouru.

Après 50 000 km, le pneu témoin présentait une usure maximale sur les bords de la bande de roulement et en outre une usure en dents de scie généralisée sur l'ensemble de la bande de roulement préjudiciable au confort tandis que le pneu conforme à l'invention ne présentait pas ces deux types d'usure après 85 000 km, tout en possédant une adhérence nettement améliorée à la fois sur sol humide et enneigé.

**Revendications**

1.  Bande de roulement de pneumatique pour véhicules poids lourd comportant une pluralité de rainures d'orientation générale circonférentielle (10) et une pluralité de rainures d'orientation générale transversale (12) délimitant une pluralité de rangées circonférentielles de blocs individuels (13) et dont au moins une partie est munie d'incisions (15) ayant une profondeur qui est décroissante de l'équateur vers les bords de la bande de roulement, caractérisée en ce que les blocs (13) sont reliés entre eux dans le sens circonférentiel par des plates-formes (14), dont la hauteur moyenne mesurée par rapport à la ligne fictive reliant le fond des rainures circonférentielles est croissante de l'équateur de la bande de roulement vers les bords, et en ce que la densité des incisions (15) est maximale dans la zone équatoriale (Z) de la bande de roulement.

2.  Bande de roulement selon la revendication 1, caractérisée en ce que la hauteur et la superficie des plates-formes (14), la profondeur et la superficie totale des incisions (15) présentes dans les blocs (13) satisfont à l'ensemble des relations suivantes lorsqu'elle possède de 4 à 5 rainures circonférentielles :

$$h1 = 0 \text{ à } 50 \% \quad H1 \qquad\qquad (h3/H3) - (h2/H2) \geq 20 \%$$

$$h2 = 45 \text{ à } 75 \% \quad H2 \qquad \text{avec}$$

$$h3 = 70 \text{ à } 100 \% \quad H3 \qquad\qquad (h2/H2) - (h1/H1) \geq 10 \%$$

$$s1 = 0 \text{ à } 35 \% \quad S1 \qquad\qquad (s3/S3) - (s2/S2) \geq 20 \%$$

$$s2 = 20 \text{ à } 55 \% \quad S2 \qquad \text{avec}$$

$$s3 = 40 \text{ à } 100 \% \quad S3 \qquad\qquad (s2/S2) - (s1/S1) \geq 10 \%$$

$$p1 = 40 \text{ à } 100 \% \quad H1 \qquad\qquad (P2/H2) - (P3/H3) \geq 10 \%$$

$$p2 = 20 \text{ à } 55 \% \quad H2 \qquad \text{avec}$$

$$p3 = 0 \text{ à } 35 \% \quad H3$$

$$A1 = 40 \text{ à } 100 \% \quad S1 \qquad\qquad (A2/H2) - (A3/H3) \geq 10 \%$$

$$A2 = 20 \text{ à } 55 \% \quad S2 \qquad \text{avec}$$

$$A3 = 0 \text{ à } 35 \% \quad S3 \qquad\qquad (A1/H1) - (A2/H2) \geq 10 \%$$

dans lesquelles

h1, h2, h3      représentent les hauteurs respectives des plates-formes présentes dans les rangées circonférentielles de blocs de rang considéré, en allant du plan équatorial de la bande de roulement vers ses bords;

H1, H2, H3      représentent les hauteurs des blocs de gomme de la bande de roulement de rangée considéré;

s1, s2, s3      représentent les superficies des parois des plates-formes adjacentes aux parois des blocs délimitant les rainures transversales des rangées circonférentielles de rang considéré;

S1, S2, S3      représentent la superficie des parois des blocs délimitant les rainures transversales des rangées circonférentielles de rang considéré;

P1, P2, P3      représentent la profondeur de chacune des incisions présentes dans chacun des blocs des rangées circonférentielles de rang considéré;

A1, A2, A3      représentent la superficie totale dans chacun des blocs de l'ensemble des incisions présentes dans les blocs des rangées circonférentielles de rang considéré;

les indices désignant le rang n attribué à la rangée circonférentielle considérée, ce rang allant croissant de l'équateur vers les bords de la bande de roulement.

3.    Bande de roulement selon la revendication 1, caractérisée en ce que la hauteur et la superficie des plates-formes (14), la profondeur et la superficie totale des incisions (15) présentes dans les blocs (13) satisfont à l'ensemble des relations suivantes lorsqu'elle possède 6 ou 7 rainures circonférentielles

```
h1 =   0 à  50 % H1        (h4/H4) - (h3/H3) ≥ 20 %
h2 =  30 à  60 % H2 avec  (h3/H3) - (h2/H2) ≥ 10 %
h3 =  50 à  80 % H3        (h2/H2) - (h1/H1) ≥  5 %
h4 =  70 à 100 % H4


s1 =   0 à  30 % S1        (s4/54) - (s3/S3) ≥ 20 %
s2 =  10 à  40 % S2 avec  (s3/S3) - (s2/S2) ≥ 10 %
s3 =  20 à  50 % S3
s4 =  40 à 100 % S4        (s2/S2) - (s1/S1) ≥  5 %·


P1 =  45 à 100 % H1
P2 =  30 à  80 % H2 avec  (p3/H3) - (p4/H4) ≥ 10 %
P3 =  15 à  55 % H3        (p2/H2) - (p3/H3) ≥  5·%
P4 =   0 à  30 % H4


A1 =  45 à 100 % S1        (A3/S3) - (A4/S4) ≥ 10·%
A2 =  30 à  80 % S2 avec  (A2/S2) - (A3/S3) ≥ 10 %
A3 =  15 à  55 % S3        (A1/S1) - (A2/S2) ≥  5 %
A4 =   0 à  30 % S4
```

dans lesquelles

h, H, s, S, P, A et les indices ont les mêmes significations que dans la revendication 2, en fonction du rang considéré des rangées circonférentielles de blocs.

4. Bande de roulement selon l'une quelconque des revendications 1, 2 ou 3, caractérisée en ce que les profondeurs des incisions (15) et les hauteurs des plates-formes (14) de rang considéré satisfont pour chacune des rangées circonférentielles de blocs (13) à la relation : $0,85\ H_n < P_n + h_n < 1,15\ H_n$ et $0,80\ S_n < s_n + A_n < 1,20\ S_n$ dans laquelle P, h, H, s, S, A et les indices ont les mêmes significations qu'aux revendications 2 et 3 pour le rang considéré.

5. Bande de roulement selon l'une quelconque des revendications 1, 2, 3, 4, caractérisée en ce que les incisions (15) relient et débouchent sur les rainures circonférentielles (10) ou les bords de la bande de roulement.

6. Enveloppe de pneumatique munie d'une bande de roulement selon la revendication 1.

7. Enveloppe de pneumatique munie d'une bande de roulement selon la revendication 2.

8. Enveloppe de pneumatique munie d'une bande de roulement selon la revendication 3.

9. Enveloppe de pneumatique munie d'une bande de roulement selon la revendication 4.

10. Enveloppe de pneumatique munie d'une bande de roulement selon la revendication 5.


**Patentansprüche**

1. Reifenlauffläche für Schwerlastfahrzeuge, mit einer Mehrzahl von allgemein in Umfangsrichtung orientierten Rillen (10) und einer Mehrzahl von allgemein quer orientierten Rillen (12), die eine Mehrzahl von umlaufenden Reihen einzelner Blöcke (13) begrenzen, von denen wenigstens ein Teil mit Einschnitten (15) versehen ist, deren Tiefe vom Äquator zu den Rändern der Lauffläche hin abnimmt,
dadurch gekennzeichnet, daß die Blöcke (13) untereinander in Umfangsrichtung durch Plattformen (14) verbunden sind, deren mittlere Höhe, gemessen mit Bezug auf die den Boden der umlaufenden Rillen verbindende fiktive Linie, vom Äquator der Lauffläche zu den Rändern hin zunimmt, und daß die Dichte der Einschnitte (15) im Äquatorialabschnitt (Z) der Lauffläche maximal ist.

2. Lauffläche nach Anspruch 1, dadurch gekennzeichnet, daß die Höhe und die Oberfläche der Plattformen (14), die Tiefe und die Gesamtoberfläche der Einschnitte (15) in den Blöcken (13) der Gesamtheit der folgenden Beziehungen genügen, wenn die Lauffläche 4 bis 5 umlaufende Rillen aufweist:

$$h_1 = 0 \text{ bis } 50 \text{ \% } H_1 \qquad (h_3/H_3) - (h_2/H_2) \geq 20 \text{ \%}$$
$$h_2 = 45 \text{ bis } 75 \text{ \% } H_2 \quad \text{wobei}$$
$$h_3 = 70 \text{ bis } 100 \text{ \% } H_3 \qquad (h_2/H_2) - (h_1/H_1) \geq 10 \text{ \%}$$

$$s_1 = 0 \text{ bis } 35 \text{ \% } S_1 \qquad (s_3/S_3) - (s_2/S_2) \geq 20 \text{ \%}$$
$$s_2 = 20 \text{ bis } 55 \text{ \% } S_2 \quad \text{wobei}$$
$$s_3 = 40 \text{ bis } 100 \text{ \% } S_3 \qquad (s_2/S_2) - (s_1/S_1) \geq 10 \text{ \%}$$

$$p_1 = 40 \text{ bis } 100 \text{ \% } H_1 \qquad (P_2/H_2) - (P_3/H_3) \geq 10 \text{ \%}$$
$$p_2 = 20 \text{ bis } 55 \text{ \% } H_2 \quad \text{wobei}$$
$$p_3 = 0 \text{ bis } 35 \text{ \% } H_3$$

$$A_1 = 40 \text{ bis } 100 \text{ \% } S_1 \qquad (A_2/H_2) - (A_3/H_3) \geq 10 \text{ \%}$$
$$A_2 = 20 \text{ bis } 55 \text{ \% } S_2 \quad \text{wobei}$$
$$A_3 = 0 \text{ bis } 35 \text{ \% } S_3 \qquad (A_1/H_1) - (A_2/H_2) \geq 10 \text{ \%}$$

wobei

| | |
|---|---|
| h1, h2, h3 | die jeweiligen Höhen der Plattformen in den umlaufenden Blockreihen vom betrachteten Rang darstellen, ausgehend von der Äquatorebene der Lauffläche zu deren Rändern hin; |
| H1, H2, H3 | die Höhen der Gummiblöcke der Lauffläche der betrachteten Reihe darstellen; |
| s1, s2, s3 | die Oberflächen der Plattformwände darstellen, die den die Querrillen der umlaufenden Reihen vom betrachteten Rang begrenzenden Blockwänden benachbart sind; |
| S1, S2, S3 | die Oberfläche der die Querrillen begrenzenden Blockwände der umlaufenden Reihen vom betrachteten Rang darstellen; |
| P1, P2, P3 | die Tiefe eines jeden Einschnitts in jedem der Blöcke der umlaufenden Reihen vom betrachteten Rang darstellen; |
| A1, A2, A3 | die Gesamtoberfläche in jedem Block der Gesamtheit der Einschnitte in den Blöcken der umlaufenden Reihen vom betrachteten Rang darstellen; |

wobei die Indizes den der betrachteten umlaufenden Reihe zugewiesenen Rang bezeichnen, wobei der Rang vom Äquator zu den Rändern der Lauffläche hin zunimmt.

3. Lauffläche nach Anspruch 1, dadurch gekennzeichnet, daß die Höhe und die Oberfläche der Plattformen (14), die Tiefe und die Gesamtoberfläche der Einschnitte (15) in den Blöcken (13) der Gesamtheit der nachfolgenden Beziehungen genügen, wenn die Lauffläche 6 oder 7 umlaufende Rillen aufweist

```
h1 =  0 bis  50 % H1              (h4/H4) - (h3/H3) ≥ 20 %
h2 = 30 bis  60 % H2  wobei       (h3/H3) - (h2/H2) ≥ 10 %
h3 = 50 bis  80 % H3              (h2/H2) - (h1/H1) ≥  5 %
h4 = 70 bis 100 % H4


s1 =  0 bis  30 % S1              (s4/S4) - (s3/S3) ≥ 20 %
s2 = 10 bis  40 % S2  wobei       (s3/S3) - (s2/S2) ≥ 10 %
s3 = 20 bis  50 % S3
s4 = 40 bis 100 % S4              (s2/S2) - (s1/S1) ≥  5 %


P1 = 45 bis 100 % H1
P2 = 30 bis  80 % H2  wobei       (p3/H3) - (p4/H4) ≥ 10 %
P3 = 15 bis  55 % H3              (p2/H2) - (p3/H3) ≥  5 %
P4 =  0 bis  30 % H4


A1 = 45 bis 100 % S1              (A3/S3) - (A4/S4 ≥ 10 %
A2 = 30 bis  80 % S2  wobei       (A2/S2) - (A3/S3) ≥ 10 %
A3 = 15 bis  55 % S3              (A1/S1) - (A2/S2) ≥  5 %
A4 =  0 bis  30 % S4
```

wobei

h, H, s, S, P, A und die Indizes dieselben Bedeutungen wie im Anspruch 2 haben, in Abhängigkeit vom betrachteten Rang der umlaufenden Blockreihen.

4.  Lauffläche nach einem der Ansprüche 1, 2 oder 3, dadurch gekennzeichnet, daß die Tiefen der Einschnitte (15) und die Höhen der Plattformen (14) vom betrachteten Rang für jede der umlaufenden Reihen von Blöcken (13) die Beziehung

$$0{,}85\,H_n < P_n + h_n < 1{,}15\,H_n \text{ und } 0{,}80\,S_n < s_n + A_n < 1{,}20\,S_n$$

erfüllen, wobei P, h, H, s, S, A und die Indizes dieselben Bedeutungen wie in den Ansprüchen 2 und 3 für den betrachteten Rang haben.

5.  Lauffläche nach einem der Ansprüche 1, 2, 3 oder 4, dadurch gekennzeichnet, daß die Einschnitte (15) auf die umlaufenden Rillen (10) oder die Ränder der Lauffläche münden und diese miteinander verbinden.

6.  Reifenmantel mit einer Lauffläche nach Anspruch 1.

7.  Reifenmantel mit einer Lauffläche nach Anspruch 2.

8.  Reifenmantel mit einer Lauffläche nach Anspruch 3.

9.  Reifenmantel mit einer Lauffläche nach Anspruch 4.

10. Reifenmantel mit einer Lauffläche nach Anspruch 5.

**Claims**

1.  A tyre tread for heavy goods vehicles comprising a plurality of grooves of generally circumferential orientation (10) and a plurality of grooves of generally transverse orientation (12) defining a plurality of cir-

EP 0 486 838 B1

cumferential rows of individual blocks (13) at least a part of which are provided with fine incisions (15) having a height decreasing from the equator towards the edges of the tread, is
characterized by the fact that the blocks (13) are connected with each other in the circumferential direction by platforms (14), the mean height of which measured with respect to the fictious line connecting the bottom of the circumferential grooves being increasing from the equator of the tread towards its edges, and that the density of the incisions (15) is maximum in the equatorial zone (Z) of the tread.

2. A tread according to Claim 1, characterized by the fact that the height and the area of the platforms (14) and the depth and the total area of the incisions (15) present in the blocks (13) satisfy all of the following relationships when it has 4 to 5 circumferential grooves :

$$h1 = 0 \text{ to } 50 \text{ \% } H1 \qquad (h3/H3) - (h2/H2) \geq 20\%$$
$$h2 = 45 \text{ to } 75\% \text{ } H2 \quad \text{with}$$
$$h3 = 70 \text{ to } 100\% \text{ } H3 \qquad (h2/H2) - (h1/H1) \geq 10\%$$

$$s1 = 0 \text{ to } 35\% \text{ } S1 \qquad (s3/S3) - (s2/S2) \geq 20\%$$
$$s2 = 20 \text{ to } 55\% \text{ } S2 \quad \text{with}$$
$$s3 = 40 \text{ to } 100\% \text{ } S3 \qquad (s2/S2) - (s1/S1) \geq 10\%$$

$$p1 = 40 \text{ to } 100\% \text{ } H1 \qquad (P2/H2) - (P3/H3) \geq 10\%$$
$$p2 = 20 \text{ to } 55\% \text{ } H2 \quad \text{with}$$
$$p3 = 0 \text{ to } 35\% \text{ } H3$$

$$A1 = 40 \text{ to } 100\% \text{ } S1 \qquad (A2/H2) - (A3/H3) \geq 10\%$$
$$A2 = 20 \text{ to } 55\% \text{ } S2 \quad \text{with}$$
$$A3 = 0 \text{ to } 35\% \text{ } S3 \qquad (A1/H1) - (A2/H2) \geq 10\%$$

in which
| | |
|---|---|
| h1, h2, h3 | represent the respective heights of the platforms present in the circumferential rows of blocks of the row in question, going from the equatorial axis of the tread towards its edges; |
| H1, H2, H3 | represent the heights of the rubber blocks of the tread of the row in question; |
| s1, s2, s3 | represent the areas of the walls of the platforms adjacent to the walls of the blocks defining the transverse grooves of the circumferential rows of the row in question ; |
| S1, S2, S3 | represent the area of the walls of the blocks defining the transverse grooves of the circumferential rows of the row in question; |
| P1, P2, P3 | represent the depth of each of the incisions present in each of the blocks of the circumferential rows of the row in question; |
| A1, A2, A3 | represent the total area in each of the blocks of all of the incisions present in the blocks of the circumferential rows of the row in question. |

the indexes designating the row n alloted to the considered circumferential row, said row increasing from the equator towards the edges of the tread.

3. A tread according to Claim 1, characterized by the fact that the height and the area of the platforms (14) and the depth and the total area of the incisions (15) present in the blocks (13) satisfy all the following relationships when it has 6 or 7 circumferential grooves:

10

```
h1 = 0 to 50% H1          (h4/H4) - (h3/H3) ≥ 20%
h2 = 30 to 60% H2  with   (h3/H3) - (h2/H2) ≥ 10 %
h3 = 50 to 80% H3          (h2/H2) - (h1/H1) ≥ 5 %
h4 = 70 to 100% H4


s1 = 0 to 30% S1          (s4/S4) - (s3/S3) ≥ 20 %
s2 = 10 to 40% S2  with   (s3/S3) - (s2/S2) ≥ 10%
s3 = 20 to 50% S3
s4 = 40 to 100% S4         (s2/S2) - (s1/S1) ≥ 5%


P1 = 45 to 100% H1
P2 = 30 to 80% H2  with   (p3/H3) - (p4/H4) ≥ 10%
P3 = 15 to 55% H3          (p2/H2) - (p3/H3) ≥  5%
P4 = 0 to 30% H4


A1 = 45 to 100% S1         (A3/S3) - (A4/S4) ≥ 10%
A2 = 30 to 80% S2  with   (A2/S2) - (A3/S3) ≥ 10%
A3 = 15 to 55% S3          (A1/S1) - (A2/S2) ≥ 5%
A4 = 0 to 30% S4
```

in which,

h, H, s, S, P, A and the indexes have the same meanings as in Claim 2, as a function of the row in question of the circumferential rows of blocks.

4. A tread according to any of Claims 1, 2, and 3, characterized by the fact that the depths of the incisions (15) and the heights of the platforms (14) of the row in question satisfy, for each of the circumferential rows of blocks (13), the relationships: 0.85 Hn < Pn + hn < 1.15 Hn and 0.8 Sn < sn + An < 1.20 Sn in which P, h, H, s, S, A and the indexes have the same meanings as in Claims 2 and 3 for the row in question.

5. A tread according to any of Claims 1, 2, 3, 4 characterized by the fact that the incisions (15) connect and debouch on the circumferential grooves (10) or the edges of the tread.

6. A tyre provided with a tread according to claim 1.

7. A tyre provided with a tread according to Claim 2.

8. A tyre provided with a tread according to Claim 3.

9. A tyre provided with a tread according to Claim 4.

10. A tyre provided with a tread according to Claims 5.

FIG.1

FIG.1 bis

FIG.2

FIG.3

FIG.4